(19)

**Europäisches Patentamt**
**European Patent Office**
**Office européen des brevets**

(11)  **EP 4 707 317 A1**

(12) **EUROPEAN PATENT APPLICATION**
published in accordance with Art. 153(4) EPC

(43) Date of publication:
**11.03.2026  Bulletin 2026/11**

(21) Application number: **24800101.8**

(22) Date of filing: **26.04.2024**

(51) International Patent Classification (IPC):
*C08F 290/06* (2006.01)  *B29C 45/14* (2006.01)
*B32B 27/16* (2006.01)  *B32B 27/18* (2006.01)
*B32B 27/30* (2006.01)  *B32B 27/40* (2006.01)
*C08F 299/06* (2006.01)  *C08G 18/32* (2006.01)
*C08G 18/67* (2006.01)  *C08G 18/75* (2006.01)
*C08J 7/046* (2020.01)  *C09D 4/02* (2006.01)
*C09D 5/00* (2006.01)  *C09D 7/47* (2018.01)
*C09D 7/48* (2018.01)  *C09D 7/61* (2018.01)
*C09D 7/63* (2018.01)  *C09D 175/14* (2006.01)

(52) Cooperative Patent Classification (CPC):
**B29C 45/14; B32B 27/16; B32B 27/18;
B32B 27/30; B32B 27/40; C08F 290/06;
C08F 299/06; C08G 18/32; C08G 18/67;
C08G 18/75; C08J 7/046; C09D 4/00; C09D 5/00;
C09D 7/47; C09D 7/48;**          (Cont.)

(86) International application number:
**PCT/JP2024/016463**

(87) International publication number:
**WO 2024/228370 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **02.05.2023  JP 2023076071
13.06.2023  JP 2023096973
30.10.2023  JP 2023185167
10.11.2023  JP 2023191904**

(71) Applicant: **Aica Kogyo Co., Ltd
Kiyosu-shi, Aichi 452-0917 (JP)**

(72) Inventors:
• **SATO, Hidetoshi
Ama-shi, Aichi 490-1112 (JP)**
• **KATO, Taku
Ama-shi, Aichi 490-1112 (JP)**
• **MASE, Haruhiko
Ama-shi, Aichi 490-1112 (JP)**
• **KUMAGAI, Masaaki
Ama-shi, Aichi 490-1112 (JP)**

(74) Representative: **Barker Brettell LLP
100 Hagley Road
Edgbaston
Birmingham B16 8QQ (GB)**

(54) **PHOTOCURABLE RESIN COMPOSITION, HARD COAT FILM FOR MOLDING, FILM FOR MOLDING, INSERT MOLDED ARTICLE, OUT-MOLDED ARTICLE, METHOD FOR PRODUCING INSERT MOLDED ARTICLE, AND METHOD FOR PRODUCING OUT-MOLDED ARTICLE**

(57)   A photocurable resin composition comprises: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D). A weight-average molecular weight of the urethane acrylate (A) is 2,000 to 12,000, and a primary average particle size of the alumina fine particles (B) is 40 to 150 nm.

FIG. 1

**(Cont. next page)**

(52) Cooperative Patent Classification (CPC): (Cont.)
**C09D 7/61; C09D 7/63; C09D 175/14**

**Description**

CROSS-REFERENCE TO RELATED APPLICATION

This international application claims the benefits of Japanese Patent Application No. 2023-076071 filed on May 2, 2023 with the Japan Patent Office, Japanese Patent Application No. 2023-096973 filed on June 13, 2023 with the Japan Patent Office, Japanese Patent Application No. 2023-185167 filed on October 30, 2023 with the Japan Patent Office, and Japanese Patent Application No. 2023-191904 filed on November 10, 2023 with the Japan Patent Office, the and the entire disclosures of Japanese Patent Application No. 2023-076071, Japanese Patent Application No. 2023-096973, Japanese Patent Application No. 2023-185167, and Japanese Patent Application No. 2023-191904 are incorporated in this international application by reference.

TECHNICAL FIELD

The present disclosure relates to a photocurable resin composition, a hard coat film for forming, a forming film, an insert molded product, an out-mold formed product, method for producing the insert molded product and a method for producing the out-mold formed product.

BACKGROUND ART

Acrylic photocurable resin compositions are used in many fields to add special properties to surfaces of plastic films and plastic formed products. For example, a hard coat film can be obtained by applying a photocurable resin composition onto a polyethylene terephthalate (hereinafter, referred to as "PET") and forming a highly hard resin cured layer. Hard coat films are widely used as hard coat films for touch panels and hard coat films for forming.

Sometimes, a pattern is printed on a surface of a hard coat film for forming, and then the film is formed into a three-dimensional shape while being softened by heating. If a resin cured layer of the hard coat film for forming is hard, microcracks are likely to be formed on curved surfaces when the hard coat film for forming is processed into a three-dimensional shape. Thus, processing shapes of hard coat films for forming have been limited.

The Applicant has invented a hard coating agent for insert forming that achieves both surface hardness and formability (Patent Document 1). This hard coating agent contains a triazine ring-containing (meth)acrylate prepolymer and organic microparticles with a primary average particle size of 80 to 500 nm. The resin cured layer formed using this hard coating agent exhibits both excellent flexibility and surface properties when the film has a thickness of 1 to 10 $\mu$m.

PRIOR ART DOCUMENTS

PATENT DOCUMENTS

Patent Document 1: Japanese Patent No. 4848200

SUMMARY OF THE INVENTION

PROBLEMS TO BE SOLVED BY THE INVENTION

As insert molded products become widely used, various properties are increasingly required for hard coat films for forming. For example, properties such as formability and scratch resistance are required for hard coat films for forming.

In one aspect of the present disclosure, it is desirable to provide a photocurable resin composition, a hard coat film for forming, a forming film, an insert molded product, and an out-mold formed product, a method for producing the insert molded product, and a method for producing the out-mold formed product, which are excellent in formability and scratch resistance.

MEANS FOR SOLVING THE PROBLEMS

One aspect of the present disclosure provides a photocurable resin composition comprising: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D), wherein a weight-average molecular weight of the urethane acrylate (A) is 2,000 to 12,000 and a primary average particle size of the alumina fine particles (B) is 40 to 150 nm.

The photocurable resin composition in one aspect of the present disclosure excels in formability and scratch resistance.

Another aspect of the present disclosure provides a photocurable resin composition comprising: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D), wherein a primary average particle size of the alumina fine particles (B) is 40 to 150 nm and a breaking elongation of a film having a base material and a cured layer of the photocurable resin composition formed on the base material is 50% or more at an ambient temperature of 130°C and a tensile speed of 300 mm/min.

The photocurable resin composition in another aspect of the present disclosure excels in formability and scratch resistance.

Yet another aspect of the present disclosure provides a photocurable resin composition comprising: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D), wherein a weight-average molecular weight of the urethane acrylate (A) is 2,000 to 12,000 and wherein, when an abrasion test is conducted on a film having a base material and a cured layer of the photocurable resin composition formed on the base material using a car wash abrasion tester in accordance with DIN EN ISO20566, gloss of the cured layer after the abrasion test is 50% or more of gloss of the cured layer before the abrasion test.

The photocurable resin composition in yet another aspect of the present disclosure excels in formability and scratch resistance.

Another aspect of the present disclosure provides a method for producing an insert molded product, the method comprising: shaping a forming film using a mold, the forming film having a plastic base material; a cured layer of a photocurable resin composition formed on the plastic base material; and one or more of: a decorative layer; a pressure-sensitive adhesive layer; and a backing sheet layer; and injecting molten resin to the forming film from a side opposite to the cured layer to form a resin formed product. The photocurable resin composition comprises: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D), wherein a weight-average molecular weight of the urethane acrylate (A) is 2,000 to 12,000 and wherein a primary average particle size of the alumina fine particles (B) is 40 to 150 nm.

The method for producing an insert molded product in another aspect of the present disclosure can produce an insert molded product excellent in formability and scratch resistance.

Yet another aspect of the present disclosure is a method for producing an out-mold formed product comprising: vacuum forming or pressure forming a forming film onto a preformed base material, the forming film comprising at least one of: a plastic base material; a cured layer of a photocurable resin composition formed on the plastic base material; a decorative layer; a pressure-sensitive adhesive layer; and a backing sheet layer. The photocurable resin composition comprises: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D), wherein a weight-average molecular weight of the urethane acrylate (A) is 2,000 to 12,000 and wherein a primary average particle size of the alumina fine particles (B) is 40 to 150 nm.

The method for producing an out-mold formed product in yet another aspect of the present disclosure can produce an out-mold formed product excellent in formability and scratch resistance.

BRIEF DESCRIPTION OF THE DRAWINGS

[FIG. 1] FIG. 1 is a cross-sectional diagram illustrating a configuration of a hard coat film for forming.
[FIG. 2] FIG. 2A is a cross-sectional diagram illustrating a layer structure of forming films F11, F12, and F15. FIG. 2B is a cross-sectional diagram illustrating a layer structure of forming films F13, F14, and F16.

MODE FOR CARRYING OUT THE INVENTION

An example embodiment of the present disclosure will be described with reference to the drawings.

1. Photocurable Resin Composition

A photocurable resin composition comprises: urethane acrylate (A) obtained by reacting pentaerythritol triacrylate (hereinafter, referred to as "IPDI") with diisocyanate that is obtained by reacting ethylene glycol and isophorone diisocyanate (hereinafter, referred to as "PETA"); alumina fine particles (B); a leveling agent (C); and a photoinitiator (D).

In the present specification, the term "(meta)acrylate" means both acrylate and methacrylate. Also, the urethane acrylate (A), the alumina fine particles (B), the leveling agent (C) and the photoinitiator (D) are respectively referred to as "component (A)", "component (B)", "component (C)", and "component (D)".

The IPDI used in synthesis of the component (A) is a lipoic diisocyanate. The IPDI is resistant to yellowing, excellent in weather stability, and highly rigid. Therefore, using the IPDI in the synthesis of the component (A) can increase hardness of the cured layer (hereinafter, referred to as "resin cured layer") of the photocurable resin composition.

By reacting ethylene glycol, which has a very short carbon chain, with the IPDI, it is possible to increase concentration of urethane bonds within molecules of the photocurable resin composition. By increasing the concentration of urethane bonds, it is possible to form a main backbone of a linear chain structure with excellent chemical resistance and high rigidity. When polyethylene glycol is used instead of ethylene glycol, concentration of urethane bonds decreases, and chemical resistance tends to decrease.

There is no particular limitation on how to synthesize the component (A). Known methods can be used for synthesizing the component (A). Reaction for synthesizing the component (A) may be carried out in absence of a solvent or in presence of a solvent. When the component (A) has a large molecular weight, reactions using a solvent are preferable. In reactions using a solvent, stirring is easy even if the component (A) has a large molecular weight. Examples of the solvent include ketones such as methyl ethyl ketone (hereinafter, referred to as "MEK") and aromatic inert solvents such as xylene.

It is preferable to use a catalyst in reactions between hydroxyl groups of ethylene glycol and PETA and isocyanate groups. Examples of the catalyst include tin catalysts such as dibutyltin dilaurate and metal alkoxide catalysts such as cobalt naphthenate. A reaction temperature for synthesizing the component (A) can be appropriately set, preferably 40 to 120°C, and more preferably 60 to 100°C.

The component (A) has a weight-average molecular weight (hereinafter, referred to as "Mw") of, for example, 2,000 to 12,000, preferably 3,000 to 11,000, and more preferably 3,500 to 10,000.

When the Mw of the component (A) is 2,000 or more, breaking elongation of the resin cured layer is increased, and thus formability of the photocurable resin composition is improved. When the Mw of the component (A) is 12,000 or less, wear resistance and abrasion resistance of the resin cured layer are improved.

The Mw of the component (A) can be adjusted by a molar ratio of ethylene glycol to IPDI to be reacted. As the ratio of the number of moles of IPDI to the number of moles of ethylene glycol approaches one, the Mw tends to increase.

The Mw is a value measured by gel permeation chromatography. When gel permeation chromatography is performed, a column filled with a styrenedivinylbenzene-based filler was used. Also, when gel permeation chromatography is performed, tetrahydrofuran eluent was used. The Mw was calculated using a conversion method based on standard polystyrene molecular weight.

An amount of the component (A) blended with a total solid content of the photocurable resin composition is preferably 70 to 95% by weight, more preferably 75 to 93% by weight, and particularly preferably 80 to 90% by weight. When the amount of the component (A) is 70% by weight or more, the photocurable resin composition has higher formability and chemical resistance. When the amount of the component (A) is 95% by weight or less, the photocurable resin composition has higher abrasion resistance and car wash durability.

The component (B) increases hardness of the resin cured layer, and also improves wear resistance, abrasion resistance, and car wash durability of the resin cured layer. Car wash durability is a property of the resin cured layer that makes it difficult for scratches to be formed even when a car wash machine or the like is used. Abrasion resistance and car wash durability correspond to scratch resistance.

Generally, a method for evaluating abrasion resistance of a resin cured layer involves using steel wool (hereinafter, referred to as "SW") in a dry state with a load of approximately 200 to 500 g/25 mm $\phi$, and evaluating the degree of scratches on the resin cured layer.

On the other hand, when an automatic car wash machine is used, materials with relatively low elastic modulus (for example, polymeric rubber materials) hit the surface of the resin cured layer with a high force for a short period of time with moisture present. As such, due to differences in a manner of applying a force to the surface of the resin cured layer between the general method for evaluating abrasion resistance of a resin cured layer and when the automatic car wash machine is used, scratches may appear on the resin cured layer when a car wash machine is used, even when the evaluation results are favorable using the general method for evaluating the abrasion resistance of a resin cured layer.

The Applicant discovered after repeated trial and error that by incorporating the component (B) into the photocurable resin composition, car wash durability of the resin cured layer was improved. The Applicant further discovered that by incorporating the component (B) having a specific particle size, car wash durability of the resin cured layer was significantly improved.

The component (B) has a primary average particle size of preferably 10 to 200 nm, more preferably 40 to 150 nm, particularly preferably 50 to 100 nm, and most preferably 60 to 80 nm. The component (B), for example, is nanoalumina.

When the primary average particle size of the component (B) is 10 nm or more, car wash durability is further improved. When the primary average particle size of the component (B) is 200 nm or less, the hard coat film for forming including the resin cured layer has favorable optical properties. When the primary average particle size of the component (B) is 40 to 150 nm, car wash durability is significantly improved. The primary average particle size is a median diameter (d = 50) measured by dynamic light scattering (DLS).

An amount of the component (B) blended with the total solid content of the photocurable resin composition is preferably 0.1 to 20% by weight, more preferably 0.5 to 15% by weight, particularly preferably 1 to 10% by weight, and most preferably 1.5 to 8% by weight. When the amount of the component (B) is 0.1% by weight or more, car wash durability is further improved. When the amount of the component (B) is 20% by weight or less, formability of the resin cured layer is further improved.

The component (C) improves leveling properties when the photocurable resin composition is coated. Also, the component (C) improves SW resistance of the resin cured layer. SW resistance is a property of the resin cured layer that is resistant to scratching when the resin cured layer is subjected to an evaluation method for abrasion resistance using SW.

It is preferable that the component (C) has reactive functional groups that can polymerize with binder resin to form the resin cured layer. In this case, it is possible to inhibit the component (C) from being lost from the resin cured layer over time due to bleeding and the like. In addition, SW resistance of the resin cured layer remains favorable over the long term.

Examples of the component (C) include fluorine compounds, silicone compounds, and fluorine silicone compounds. These can be used alone or in combination of two or more types as the component (C).

As the component (C), polysiloxane compounds are preferable among silicone compounds. When polysiloxane compounds are used as the component (C), surface tension can be made uniform on the surface of the resin cured layer.

Examples of polysiloxane compounds include polyalkylsiloxane, polyarylsiloxane, polyalkylarylsiloxane, polyester-modified siloxane, and polyether-modified siloxane. These can be used alone or in combination of two or more types as the component (C).

An amount of the component (C) blended with the total solid content of the photocurable resin composition is preferably 0.1 to 3% by weight, and more preferably 0.3 to 2% by weight. When the amount of the component (C) is in this range, leveling properties when the photocurable resin composition is coated is favorable, and appearance of the resin cured layer is stable. Commercially available products containing the component (C) include BYK-UV3570 (manufactured by BYK Chemie GmbH, an acryloyl-containing polyester-modified polydimethylsiloxane compound).

The component (D) generates radicals when exposed to ultraviolet rays, electron beams, or the like. The generated radicals trigger polymerization reaction of the photocurable resin composition. Examples of the component (D) include general-purpose photoinitiators such as benzyl ketal, acetophenone, and phosphine oxide.

By appropriately selecting light absorption wavelength of the component (D), it is possible to impart curability to the photocurable resin composition over a wide wavelength range from an ultraviolet region to a visible light region.

Examples of the benzyl ketal component (D) include 2,2-dimethoxy-1,2-diphenylethan-1-one. Examples of $\alpha$-hydroxyacetophenone component (D) include 1-hydroxy-cyclohexyl-phenyl-ketone and 1-[4-(2-hydroxyethoxy)-phenyl]-2-hydroxy-2-methyl-1-propan-1-one.

Examples of $\alpha$-aminoacetophenone component (D) include 2-methyl-1-(4-methylthiophenyl)-2-morpholinopropan-1-one. Examples of acylphosphine oxide component (D) include 2,4,6-trimethylbenzoyl-diphenylphosphine oxide and bis(2,4,6-trimethylbenzoyl)-phenylphosphine oxide. These can be used alone or in combination of two or more types as the component (D).

It is preferable that the component (D) contains $\alpha$-hydroxyacetophenone that is resistant to yellowing. Commercially available products of component (D) include Omnirad 127D, Omnirad 184, and Omnirad 2959 (all manufactured by IGM Resins B.V.). An amount of component (D) blended with 100 parts by weight of radical polymerizable component contained in the photocurable resin composition is preferably 2 to 15 parts by weight, and more preferably 5 to 12 parts by weight.

It is preferable that the photocurable resin composition further contains a photostabilizer (E). The photostabilizer (E) is referred to as component (E) below. When the photocurable resin composition includes the component (E), it is possible to inhibit the resin cured layer from deteriorating due to ultraviolet exposure or radiant heat when the resin cured layer is used outdoors.

Examples of the component (E) include radical scavengers (e1) and ultraviolet absorbers (e2). Hereinafter, the radical scavengers (e1) and the ultraviolet absorbers (e2) are respectively referred to as "component (e1)" and "component (e2)".

The component (e1) efficiently traps alkyl radicals and peroxy radicals generated from polymers that have deteriorated due to ultraviolet rays. The component (e2) inhibits degradation of polymers by converting the absorbed ultraviolet energy into heat energy, or the like.

Examples of the component (e1) include hindered amines (hereinafter, referred to as "HALS"), hindered phenols, and aromatic amines. These can be used alone or in combination of two or more types as the component (e1). Among these, HALS are preferred. HALS have high radical scavenging efficiency even at low concentration.

An amount of the component (e1) blended with the total solid content of the photocurable resin composition is preferably 1 to 10% by weight, more preferably 2 to 8% by weight, and particularly preferably 3 to 6% by weight. When the amount of the component (e1) is in this range, photostability of the resin cured layer is further improved. Commercially available products containing the component (e1) of HALS include Tinuvin 123 and Tinuvin 249 (both manufactured by BASF Japan Ltd.).

The component (e2) is a radical chain initiation inhibitor that has an absorption band in a harmful ultraviolet region with high energy. When the photocurable resin composition includes the component (e2) and the component (e1), weather resistance of the resin cured layer is further improved and the resin cured layer becomes stabler.

Examples of the component (e2) include benzotriazoles, triazines, and benzophenones. These can be used alone or in combination of two or more types as the component (e2).

Hydroxyphenyltriazines are preferred as the component (e2). Hydroxyphenyltriazines can strongly absorb long wavelengths of ultraviolet rays. An amount of the component (e2) blended with the total solid content of the photocurable resin composition is preferably 0.3 to 5% by weight, more preferably 0.5 to 3% by weight, and particularly preferably 0.6 to 1.5% by weight. When the amount of the component (e2) is in this range, ultraviolet absorption properties of the resin cured layer are further improved.

A total amount of the component (e1) and the component (e2) is preferably 1 to 12% by weight, more preferably 1.5 to 10% by weight, and particularly preferably 4 to 8% by weight relative to the total solid content of the photocurable resin composition.

When the total amount is 1% by weight or more, weather resistance of the resin cured layer is further improved. When the total amount is 12% by weight or less, the amounts of the component (e1) and the component (e2) do not become excessive, and adhesion between the plastic base material and the resin cured layer is further improved. The total amount of the component (e1) and the component (e2) is for example, the amount of the component (E). Commercially available products containing the component (e2) include Tinuvin 460, and Tinuvin 477 (both manufactured by BASF Japan Ltd.).

The photocurable resin composition may include reactive diluents, adhesion promoters, bluing agents, pigments, defoamers, thickeners, antisettling agents, antistatic agents, anti-fogging agents, antibacterial agents, waxes, matting agents, hydrophilic agents, water repellents, inorganic fillers, organic microparticles, and so on, as required, to an extent that performance of the photocurable resin composition is not excessively impaired.

As reactive diluents, polyfunctional (meth)acrylates are preferred. Polyfunctional (meth)acrylates have low viscosity and excellent compatibility with the component (A). Examples of two-functional compounds among polyfunctional (meth)acrylates include (poly)ethylene glycol di(meth)acrylate, (poly)propylene glycol di(meth)acrylate, and dicyclopentanyl diacrylate.

Examples of three-functional compounds among polyfunctional (meth)acrylates include trimethylolpropane tri(meth)acrylate, and pentaerythritol tri(meth)acrylate.

Examples of four-functional compounds among polyfunctional (meth)acrylates include di-tri-methylol propane tetra(meta)acrylate, pentaerythritol tetra(meth)acrylate, and diglycerin tetra(meta)acrylate. Examples of five-functional compounds among polyfunctional (meth)acrylates include dipentaerythritol penta(meta)acrylate.

Examples of six-functional compounds among polyfunctional (meth)acrylates include dipentaerythritol hexa(meth)acrylate. These can be used alone or in combination of two or more types as the reactive diluent.

An amount of the reactive diluent is preferably 20 parts by weight or less, and more preferably 15 parts by weight or less relative to 100 parts by weight of the component (A). When the amount of the reactive diluent is 20 parts by weight, it is possible to improve reactivity of the photocurable resin composition while ensuring formability of the resin cured layer. The amount of the reactive diluent is preferably 15% by weight or less, and more preferably 10% by weight or less relative to the total solid content of the photocurable resin composition.

When applying the photocurable resin composition to the plastic base material, the photocurable resin composition can be diluted with a solvent. Diluting the photocurable resin composition with a solvent improves coating properties of the photocurable resin composition.

Examples of the solvent include alcohol solvents, ketone solvents, ester solvents, ether solvents, and hydrocarbon solvents. Examples of the alcohol solvents include ethanol, n-propyl alcohol, isopropyl alcohol, n-butyl alcohol, isobutyl alcohol, and diacetone alcohol.

Examples of ketone solvents include acetone, MEK, methyl isobutyl ketone, and cyclohexanone. Examples of ester solvents include ethyl acetate and butyl acetate.

Examples of ether solvents include propylene glycol monomethyl ether (hereinafter referred to as "PGM"), diethyl ether, and diisopropyl ether. Examples of hydrocarbon-based solvents include cyclohexane and methylcyclohexane.

These can be used alone or in combination of two or more types as the solvent. A weight ratio of the solid content in the photocurable resin composition after diluted with the solvent is not specifically limited, for example, 10 to 70% by weight. The weight ratio of solid content in the photocurable resin composition after diluted with the solvent can be appropriately adjusted so that the photocurable resin composition has viscosity that is easy to apply.

Examples of the plastic base material for coating the photocurable resin composition include polyester base materials, triacetyl cellulose base materials, polycarbonate (hereinafter, referred to as "PC") base materials, polysulfone base materials, nylon base materials, cycloolefin base materials, acrylic (hereinafter referred to as PMMA) base materials, polyimide base materials, acrylonitrile butadiene styrene (hereinafter referred to as "ABS") base materials, polyolefin base materials, PVC base materials, and PVA base materials. The plastic base material is in the form of a film, for example.

As the plastic base material, a composite base material made of a PC base material and an acrylic base material (hereinafter, referred to as "PC acrylic composite base material") is preferred. The PC base material has excellent impact resistance and high heat resistance. The acrylic base material has high transparency and high hardness.

The PC acrylic composite base material is a resin laminate in which an acrylic base material is laminated on at least one surface of a PC base material. Co-extrusion forming is a preferred method for laminating the acrylic base material on the PC base material.

The plastic base material can be surface treated. Examples of surface treatment include surface texturing and surface oxidation. Examples of surface texturing include primer treatment, sandblasting, and solvent treatment. Examples of surface oxidation include corona discharge treatment, chromic acid treatment, and ozone/ultraviolet irradiation treatment. By applying surface treatment to the plastic base material, adhesion between the plastic base material and the resin cured layer is improved.

A method for applying the photocurable resin composition to the plastic base material is not particularly limited. Examples of the method for applying the photocurable resin composition to the plastic base material include known coating methods and printing methods.

Examples of the coating methods include spray coating, roll coating, die coating, air knife coating, blade coating, spin coating, reverse coating, gravure coating, and wire bar coating. Examples of the printing methods include gravure printing, screen printing, offset printing, and inkjet printing. There is no particular limitation in film thickness of the photocurable resin composition, for example, 1 to 10 $\mu$m when dry.

After applying the photocurable resin composition to the plastic base material, the photocurable resin composition can be cured by ultraviolet irradiation. Examples of light sources for ultraviolet irradiation include low-pressure mercury lamps, high-pressure mercury lamps, ultra-high-pressure mercury lamps, carbon arc lamps, xenon lamps, metal halide lamps, LED lamps, and electrodeless ultraviolet lamps.

The ultraviolet irradiation may be carried out in air or in an inert gas such as nitrogen or argon. When the ultraviolet irradiation is carried out, heating the coating of the photocurable resin composition using a back roll heater or an IR heater improves curing properties of the coating. Conditions for the ultraviolet irradiation are not particularly limited. For example, irradiation intensity of the ultraviolet rays is 500 to 3000 mW/cm$^2$, and the exposure amount is 50 to 400 mJ/cm$^2$.

2. Hard coat film for forming

The hard coat film for forming comprises a plastic base material and a resin cured layer. The resin cured layer is formed on the plastic base material. The resin cured layer is formed by applying a photocurable resin composition to the plastic base material and curing the photocurable resin composition.

At a temperature of 130°C, breaking elongation of the hard coat film for forming is preferably 50% or more, more preferably 100% or more, and particularly preferably 200% or more. When the breaking elongation is 50% or more, formability of the hard coat film for forming is further improved.

The hard coat film for forming can be used, for example, for vehicle exteriors. Application examples of vehicle exteriors include exteriors of automobiles. When used for vehicle exteriors, $\Delta$E measured in the hard coat film for forming is preferably 1.0 or less, more preferably 0.8 or less, and particularly preferably 0.5 or less.

A measurement method for $\Delta$E will be described later. $\Delta$E is an indicator of weather resistance. When $\Delta$E of the hard coat film for forming is 1.0 or less, damage to the decorative layer caused by ultraviolet rays transmitted through the hard coat film for forming can be inhibited. Particularly, even when red and blue colors with poor UV resistance are used in the decorative layer, discoloration of the decorative layer over time can be inhibited if $\Delta$E of the hard coat film for forming is 1.0 or less.

A protective film may be laminated onto a surface of the hard coat film for forming where the resin cured layer is formed. The protective film protects the resin cured layer. When the protective film is laminated, scratches on the resin cured layer during insert molding or out-mold forming processes can be inhibited. As a result, yield of insert molded products or out-mold formed products is improved.

3. Forming film

The forming film comprises a plastic base material, a resin cured layer, and one or more of a decorative layer, an adhesive layer, and a backing sheet layer. The resin cured layer is formed, for example, on the plastic base material. The forming film has a structure in which one or more of the decorative layer, the adhesive layer, and the backing sheet layer are added to the hard coat film for forming. The backing sheet layer is a reinforcing layer.

Example layer structures for the forming film include resin cured layer / base material / decorative layer / adhesive layer, resin cured layer / decorative layer / base material / adhesive layer, resin cured layer / base material / decorative layer / backing sheet layer, resin cured layer / decorative layer/base material / backing sheet layer, resin cured layer / base material / adhesive layer / backing sheet layer, resin cured layer / decorative layer / base material / adhesive layer / backing sheet layer, and resin cured layer / base material / decorative layer / adhesive layer / backing sheet layer. The layer structure represented by "layer a / layer b / layer c / layer d" indicates that the layers are arranged in the order of layer a, layer b, layer c, and layer d in the thickness direction. The base material is the plastic base material.

The layer structure of the forming film may differ from the above-described layer structures. For example, in any of the above-described layer structures, at least one of a primer layer and an adhesive layer may be provided between any of the layers. When at least one of the primer layer and the adhesive layer is provided between any of the layers, adhesion between the layers is improved.

The decorative layer can be formed, for example, by a known printing method. Example printing methods include gravure printing, offset printing, silk screen printing, transfer printing, and inkjet printing, which use printing inks.

Example binders for the printing inks include acrylic, polyester, urethane, vinyl chloride-vinyl acetate copolymer binders. These can be used alone or in combination of two or more types as the binder of the printing inks. The printing inks are obtained by blending, for example, colorants such as pigments and dyes, stabilizers, plasticizers, hardeners, catalysts, and others, with the binder.

Example colorants include inorganic pigments, organic pigments, metallic pigments, pearlescent pigments, and fluorescent pigments. Examples of inorganic pigments include titanium white, vermilion, and ultramarine blue. Examples of organic pigments include Hansa Yellow A and Phthalocyanine Blue. Examples of metallic pigments include aluminum and brass. These can be used alone or in combination of two or more types as the colorants.

The decorative layer may be formed by methods such as vacuum deposition, sputtering, and electroless plating. In this case, metals such as aluminum, indium, chromium, nickel, gold, and silver may be used.

When printing inks are used, the decorative layer has a thickness of preferably 3 to 50 $\mu$m, and more preferably 5 to 30 $\mu$m. When the thickness of the decorative layer is within this range, the decorative layer has high concealability. Furthermore, when the thickness of the decorative layer is within this range, it is possible to fully express complex designs such as gradations.

The adhesive layer is, for example, a pressure-sensitive adhesive layer with tackiness. Examples of the adhesive layer include adhesive polymers of acrylic, polyolefin, rubber, polyester, silicone, and polyurethane adhesive polymers. The adhesive polymers may be crosslinked with, for example, isocyanate, epoxy, and metal chelate crosslinking agents.

The adhesive layer may be thermosetting, thermoplastic, or photocurable. The adhesive layer is preferably acrylic. Acrylic adhesive layers have high transparency and weather resistance. It is further preferable that the adhesive layer is a cross-linked acrylic. The adhesive layer may contain a tackifier.

The adhesive layer can be formed using known methods such as gravure coating, flexographic coating, roll coating, knife coating, and comma coating. Alternatively, a tacky layer preformed into a sheet shape may be laminated.

The adhesive layer has a thickness of preferably 10 to 100 $\mu$m, more preferably 20 to 80 $\mu$m, and particularly preferably 25 to 60 $\mu$m. When the thickness of the adhesive layer is 10 $\mu$m or more, adhesion between the forming film and an adherend is improved. When the thickness of the adhesive layer is 100 $\mu$m or less, it is possible to inhibit the adhesive layer from protruding from an end portion of the forming film in high temperature environments. Also, when the thickness of the adhesive layer is 100 $\mu$m or less, it is possible to inhibit decrease in pencil hardness in the forming film.

The backing sheet layer adds strength to the forming film during insert forming. By providing strength to the forming film, handling of the forming film becomes easier during preforming. Additionally, the backing sheet layer improves adhesion between injection forming resin and the forming film. Furthermore, the backing sheet layer reduces thermal damage during injection. Additionally, the backing sheet layer improves the effect of concealing the base material.

Examples of the backing sheet layer include polyethylene, polypropylene, polyester, polyurethane, polyvinyl chloride, and ABS. The backing sheet layer may be colored.

It is preferable that the backing sheet layer has a heat deformation temperature of 85 to 120°C. The heat deformation temperature is a deflection temperature under load. When the heat deformation temperature is 85°C or higher, deformation and distortion of the forming film caused by heat during drying of the printing ink of the decorative layer can be reduced.

When the heat deformation temperature is 120°C or lower, it is not necessary to raise a temperature of the forming film during preforming. Thus, it is possible to inhibit variations in elongation and distortion of the forming film during preforming. The backing sheet layer is preferably made from polypropylene, ABS, and the like. Polypropylene has a deflection temperature under load of 100°C. ABS has a deflection temperature under load of 95°C.

4. Insert forming

Insert forming can be performed using the forming film. For example, the forming film is placed so that a surface on which the resin cured layer is formed faces an inner wall surface of a mold.

At this time, if necessary, the forming film may be preformed to conform to the shape of the mold. Next, the mold is closed, and molten injection forming resin is injected into the cavity. The molten injection forming resin corresponds to molten resin.

At this point, the injection forming resin is injected to the forming film from a side opposite to the resin cured layer. A side of the forming film opposite the resin cured layer comes into contact with the injection forming resin. Next, the resin is cooled and solidified to form an insert molded product. The insert molded product is a resin formed product.

One method of preforming is to preheat the forming film to a temperature above its softening point, place the forming film in a mold, and vacuum-suction the forming film through suction holes in the mold. Alternatively, preforming can be performed using a forming mold different from the injection mold by a known forming method such as vacuum forming, pressure forming, or press forming.

On the other hand, preforming may not be performed. In this case, injection pressure of the injection forming resin enables forming of the forming film and integral forming of the forming resin and the injection forming resin to be carried out simultaneously.

Known resins that can be injection-formed can be used as the injection forming resin. Example injection forming resins include polyethylene resin, polypropylene resin, polystyrene resin, ABS resin, AS resin, acrylic resins, urethane resin, polyester resin, polycarbonate resin, polyphenylene ether resin, polyacetal resin, and polysulfone resin. These resins can be used alone or in combination of two or more types as the injection forming resin.

When the insert molded product is an automobile body or the like, the insert molded product is large in size. When the insert molded product is large in size, or small in size but thin in thickness, it is preferable that a shrinkage rate of the insert molded product after insert forming is similar to a shrinkage rate of the forming film. In this case, it is possible to inhibit defects such as warping in the insert molded product.

When performing insert forming, it is preferable that the surface of the forming film that comes into contact with the injection forming resin is the backing sheet layer or the adhesive layer.

The injection forming resin can be colored. In this case, the forming film does not need to have a decorative layer. Furthermore, by coloring the injection forming resin and blending the color of the decorative layer with that of the injection forming resin, it is possible to make the insert molded product to have a more profound appearance.

The insert molded product can be used, for example, as a substitute for a product whose outer surface is colored with paint. Examples of the product with its outer surface colored with paint include an automobile body. By coloring the injection forming resin, the process of coloring the outer surface of the insert molded product with paint can be dispensed with. In this case, defective appearance such as orange peel and pits that occur during the process of coloring the outer surface with paint can be inhibited.

## 5. Out-Mold Forming

Out-mold forming can be performed using the forming film. For example, TOM (Three-Dimensional Overlay Method) forming can be performed using the forming film. TOM forming is a film forming method in which three-dimensional surface decoration is applied to a preformed base material inside an airtight box using vacuum forming or pressure forming. When performing TOM forming using the forming film, it is possible to produce large three-dimensional products regardless of types of the base material.

When performing TOM forming using the forming film, it is preferable that the surface of the forming film that comes into contact with the formed product is an adhesive layer.

## 6. Examples

The present disclosure will be described hereinafter in detail referring to examples and comparative examples. However, these are merely examples, and the present disclosure is not limited thereto. Unless otherwise specified, measurements were performed under conditions of a temperature of 25°C and a relative humidity of 65%. Blending amounts are values calculated as solid content. The blending amounts are expressed in parts by weight.

(6-1) Preparation of Urethane Acrylate

(i) Preparation of Urethane Acrylate 1

A four-neck flask equipped with a stirrer, a reflux condenser, a dropping funnel, and a thermometer was charged with 200 parts by weight of ethylene glycol, 825 parts by weight of IPDI (NCO group 37.5%), a catalyst, and MEK, such that the weight ratio of solid content was 50% by weight. The mixture was stirred at 80°C for 6 hours and reacted. The reaction was terminated when the peak of the isocyanate groups in infrared absorption analysis reached a specified amount.

Next, 438 parts by weight of PETA (hydroxyl value 120 mg KOH/g) was added, and the mixture was stirred at 70°C for 6 hours and reacted. Infrared absorption analysis confirmed that the isocyanate groups had disappeared. Next, MEK was added to adjust the solid content to 50% by weight. Through the above process, urethane acrylate 1 with a Mw of 6,200 and six functional groups was obtained.

(ii) Preparation of Urethane Acrylate 2

A four-neck flask equipped with a stirrer, a reflux condenser, a dropping funnel, and a thermometer was charged with 200 parts by weight of ethylene glycol, 930 parts by weight of IPDI (NCO group 37.5%), a catalyst, and MEK, such that the weight ratio of solid content was 50% by weight. Next, the mixture was stirred at 80°C for 6 hours and reacted. The reaction was terminated when the peak of the isocyanate groups in infrared absorption analysis reached a specified amount.
Next, 886 parts by weight PETA (hydroxyl value 120 mg KOH/g) was added, and the mixture was stirred at 70°C for 6 hours and reacted. Infrared absorption analysis confirmed that the isocyanate groups had disappeared. Next, MEK was added to adjust the solid content to 50% by weight. Through the above process, urethane acrylate 2 with a Mw of 3,200 and six functional groups was obtained.

(iii) Preparation of Urethane Acrylate 3

A four-neck flask equipped with a stirrer, a reflux condenser, a dropping funnel, and a thermometer was charged with 200 parts by weight of ethylene glycol, 895 parts by weight of IPDI (NCO group 37.5%), a catalyst, and MEK, such that the weight ratio of solid content was 50% by weight. Next, the mixture was stirred at 80°C for 6 hours and reacted. The reaction was terminated when the peak of the isocyanate groups in infrared absorption analysis reached a specified amount.
Next, 743 parts by weight of PETA (hydroxyl value 120 mg KOH/g) was added, and the mixture was stirred at 70°C for 6 hours and reacted. Infrared absorption analysis confirmed that the isocyanate groups had disappeared. Next, MEK was added to adjust the solid content to 50% by weight. Through the above process, urethane acrylate 3 with a Mw of 3,800 and six functional groups was obtained.

(iv) Preparation of Urethane Acrylate 4

A four-neck flask equipped with a stirrer, a reflux condenser, a dropping funnel, and a thermometer was charged with 200 parts by weight of ethylene glycol, 790 parts by weight of IPDI (NCO group 37.5%), a catalyst, and MEK, such that the weight ratio of solid content was 50% by weight. Next, the mixture was stirred at 80°C for 6 hours and reacted. The reaction was terminated when the peak of the isocyanate groups in infrared absorption analysis reached a specified amount.
Next, 295 parts by weight of PETA (hydroxyl value 120 mg KOH/g) was added, and the mixture was stirred at 70°C for 6 hours and reacted. Infrared absorption analysis confirmed that the isocyanate groups had disappeared. Next, MEK was added to adjust the solid content to 50% by weight. Through the above process, urethane acrylate 4 with a Mw of 9,800 and six functional groups was obtained.

(v) Preparation of Urethane Acrylates A and B

Urethane acrylates A and B were prepared in a manner basically similar to that of urethane acrylates 1 to 3. The backbone of urethane acrylates A and B was the same as that of urethane acrylates 1 to 3. The backbone of urethane acrylates A and B was a PETA-IPDI-(ethylene glycol-IPDI)n-PETA backbone.
Urethane acrylate A had six functional groups. The weight ratio of solid content in urethane acrylate A was 50% by weight. Mw of urethane acrylate A was 1,800. Urethane acrylate B had six functional groups. The weight ratio of the solid content in urethane acrylate B was 50% by weight. Mw of urethane acrylate A was 13,000.

(6-2) Production of Photocurable Resin Composition

Photocurable resin compositions of Examples 1 to 11 and Comparative Examples 1 to 5 were produced by the following method. First, components listed in Tables 1 to 3 were mixed in proportions described in Tables 1 to 3.

[Table 1]

|  | Product name | Example 1 | Example 2 | Example 3 | Example 4 | Example 5 |
|---|---|---|---|---|---|---|
| A | Ureac 1 | 100.0 | 100.0 | 100.0 | 100.0 | 100.0 |
|  | Ureac 2 |  |  |  |  |  |
|  | Ureac 3 |  |  |  |  |  |
|  | Ureac 4 |  |  |  |  |  |

(continued)

| | Product name | Example 1 | Example 2 | Example 3 | Example 4 | Example 5 |
|---|---|---|---|---|---|---|
| Binder | Ureac A | | | | | |
| | UreacB | | | | | |
| Reactive diluent | DPHA | | | | | 10.0 |
| B | Average particle size 70nm | 3.0 | 3.0 | 0.5 | 15.0 | 3.3 |
| | Average particle size 100nm | | | | | |
| | Average particle size 50nm | | | | | |
| | Average particle size 25nm | | | | | |
| Filler | PGM-AC-4130Y | | | | | |
| C | BYK-UV3500 | 1.0 | 1.0 | 1.0 | 1.0 | 1.0 |
| D | Omnirad2959 | 5.0 | 5.0 | 5.0 | 5.0 | 5.5 |
| | Omnirad127D | 3.0 | 3.0 | 3.0 | 3.0 | 3.3 |
| E | Tinuvin249 | | 5.0 | | | |
| | Tinuvin477 | | 1.0 | | | |
| Total | | 112.0 | 118.0 | 109.5 | 124.0 | 123.1 |

[Table 2]

| | Product name | Example 6 | Example 7 | Example 8 | Example 9 | Example 10 | Example 11 |
|---|---|---|---|---|---|---|---|
| A | Ureac 1 | 100.0 | 100.0 | 100.0 | | | |
| | Ureac 2 | | | | 100.0 | | |
| | Ureac 3 | | | | | 100.0 | |
| | Ureac 4 | | | | | | 100.0 |
| Binder | Ureac A | | | | | | |
| | UreacB | | | | | | |
| Reacive diluent | DPHA | | | | | | |
| B | Average particle size 70nm | | | | 3.0 | 3.0 | 3.0 |
| | Average particle size 100nm | 3.0 | | | | | |
| | Average particle size 50nm | | 3.0 | | | | |
| | Average particle size 25nm | | | 3.0 | | | |
| Filler | PGM-AC-4130Y | | | | | | |
| C | BYK-UV3500 | 1.0 | 1.0 | 1.0 | 1.0 | 1.0 | 1.0 |
| D | Omnirad2959 | 5.0 | 5.0 | 5.0 | 5.0 | 5.0 | 5.0 |
| | Omnirad127D | 3.0 | 3.0 | 3.0 | 3.0 | 3.0 | 3.0 |
| E | Tinuvin249 | | | | | | |
| | Tinuvin477 | | | | | | |
| Total | | 112.0 | 112.0 | 112.0 | 112.0 | 112.0 | 112.0 |

[Table 3]

| | | Product name | Comparative Example 1 | Comparative Example 2 | Comparative Example 3 | Comparative Example 4 | Comparative Example 5 |
|---|---|---|---|---|---|---|---|
| | A | Ureac 1 | 100.0 | 100.0 | 100.0 | | |
| | | Ureac 2 | | | | | |
| | | Ureac 3 | | | | | |
| | | Ureac 4 | | | | | |
| Binder | | Ureac A | | | | 100.0 | |
| | | UreacB | | | | | 100.0 |
| Reactive diluent | | DPHA | | | | | |
| | B | Average particle size 70nm | 3.0 | | | 3.0 | 3.0 |
| | | Average particle size 100nm | | | | | |
| | | Average particle size 50nm | | | | | |
| | | Average particle size 25nm | | | | | |
| Filler | | PGM-AC-4130Y | | | 3.0 | | |
| C | | BYK-UV3500 | | 1.0 | 1.0 | 1.0 | 1.0 |
| D | | Omnirad2959 | 5.0 | 5.0 | 5.0 | 5.0 | 5.0 |
| | | Omnirad 127D | 3.0 | 3.0 | 3.0 | 3.0 | 3.0 |
| E | | Tinuvin249 | | | | | |
| | | Tinuvin477 | | | | | |
| | | Total | 111.0 | 109.0 | 112.0 | 112.0 | 112.0 |

Units of the amounts in Tables 1 to 3 are parts by weight. In Tables 1 to 3, "Ureac" refers to urethane acrylate. "A" in Tables 1 to 3 denotes "component (A)". Urethane acrylates 1 to 4 correspond to the component (A). In Tables 1-3, "B" denotes "component (B)". In Tables 1 to 3, components listed in rows labeled "B" under "Average particle size 70 nm", "Average particle size 100 nm", "Average particle size 50 nm", and "Average particle size 25 nm" are alumina microparticles with average particle sizes of 70 nm, 100 nm, 50 nm, and 25 nm, respectively.

"C" in Tables 1 to 3 denotes "component (C)". BYK-UV 3570 corresponds to the component (C). BYK-UV 3570 is the product name of an acryloyl-containing polyester-modified polydimethylsiloxane compound manufactured by BYK Chemie GmbH.

"D" in Tables 1 to 3 denotes "component (D)". Omnirad 2959 and Omnirad 127D correspond to the component (D). Omnirad 2959 and Omnirad 127D are the product names of products manufactured by IGM Resins B.V.

In Tables 1 to 3, "E" denotes "component (E)". Tinuvin 249 and Tinuvin 477 correspond to the component (E). Tinuvin 249 corresponds to a component (e1). Tinuvin 477 corresponds to a component (e2). Tinuvin 249 and Tinuvin 477 are the product names of products manufactured by BASF Japan Ltd.

PGM-AC-4130Y in Tables 1 to 3 is a filler made from nano-silica. The average particle size of PGM-AC-4130Y is 40 to 50 nm. PGM-AC-4130Y is the product name of a product manufactured by Nissan Chemical Corporation.

Next, the mixture was stirred until it uniformly dissolved and dispersed. Next, PGM was added to dilute the mixture so that the weight ratio of solid content is 30% by weight, and the mixture was stirred further. The above process yielded the photocurable compositions of Examples 1 to 11 and Comparative Examples 1 to 5.

(6-3) Production of Hard Coat Film for Forming

For each of the photocurable resin compositions in Examples and Comparative Examples, a hard coat film for forming was produced using the following method.

A plastic base material was prepared. The plastic base material was U-Pylon Film DF02PUL (product name, manufactured by Mitsubishi Gas Chemical Company, Inc). The plastic base material had a thickness of 125 $\mu$m. The plastic base material was a laminated film comprising a PMMA layer and a PC layer.

The photocurable resin composition was applied to the PMMA layer side of the plastic base material. The dry film thickness of the photocurable resin composition was 3 $\mu$m. The base material was then dried at 80°C in a constant-temperature chamber for 1 minute. Next, coating of the photocurable resin composition was irradiated with ultraviolet rays using a high-pressure mercury lamp. The output of the high-pressure mercury lamp was 1,300 mW/cm$^2$. The integrated light quantity of ultraviolet rays was 200 mJ. The coating of the photocurable resin composition became a resin cured layer. Through the above process, a hard coat film for forming was obtained.

In the following, the hard coat film for forming produced using the photocurable resin composition of Example 1 is indicated as the hard coat film for forming of Example 1. The same applies to the hard coat films for forming produced using the photocurable resin compositions of Examples 2 to 11 and Comparative Examples 1 to 5.

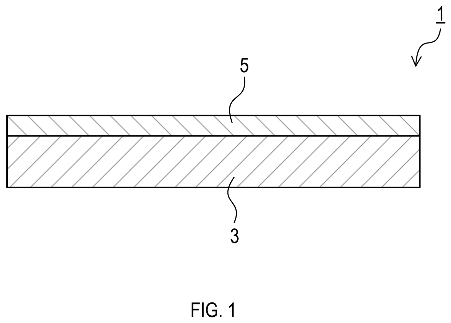

The configuration of the hard coat film 1 for forming in each example and each comparative example is shown in FIG. 1. The hard coat film 1 for forming comprises a plastic base material 3 and a resin cured layer 5. The resin cured layer 5 is formed on the plastic base material 3.

(6-4) Evaluation Method for Hard Coat Films for Forming

The following evaluations were performed on the hard coat film for forming in each example and each comparative example.

(i) Chemical Resistance

Hand cream was applied to the resin cured layer of the hard coat film for forming. The hand cream used was Neutrogena SPF 45 (product name, manufactured by Johnson & Johnson). The hard coat film for forming was then left at 80°C for 24 hours. The temperature was then returned to room temperature. Then, the hand cream was wiped off. Next, the surface of the resin cured layer where the hand cream had been wiped off was observed. Based on observation results, chemical resistance of the resin cured layer was evaluated according to the following criteria. "∘ " indicates a better evaluation result than "×".

∘ : No traces of application on the resin cured layer.
×: Traces of application are found on the resin cured layer.

(ii) Wear Resistance

The evaluation was conducted using a friction tester FR-IBS manufactured by Suga Test Instruments Co., Ltd. During the evaluation, a friction element with a test cotton cloth attached was placed in contact with the resin cured layer of the hard coat film for forming under a load of 9 N, and the friction element was moved back and forth 100 times. The test cotton cloth was Kanakin No. 3. The diameter of the friction element was 16 mm. The reciprocating speed was 1 stroke per second.

After 100 round trips, the surface of the resin cured layer was observed and wear resistance of the resin cured layer was evaluated based on the following criteria. "O " indicates a better evaluation result than "×".

∘ : No scratches on the resin cured layer.
×: Scratches are found on the resin cured layer.

(iii) Adhesion

The evaluation was conducted in accordance with the cross-cut method specified in JIS K 5600-5-6. A 10 × 10 grid was created on the resin cured layer of the hard coat film for forming at 1 mm intervals. Next, cellophane tape CT-24 (product name, manufactured by Nichiban Co., Ltd.) was applied to the resin cured layer with the grid pattern, and the cellophane tape CT-24 was pulled upward. Next, adhesion was evaluated based on the following criteria by observing the peeling condition of the resin cured layer. "∘ " indicates a better evaluation result than " ×".

∘ : The resin cured layer has not peeled off in any of the 100 squares.
×: The resin cured layer has peeled off in one or more of 100 squares.

(iv) Formability

A rectangular test piece was cut from a hard coat film for forming. The length of the short side of the rectangle was 25 mm, and the length of the long side was 110 mm. A tensile test was conducted on this test piece using Technograph TG-1kN of Minebea Co., Ltd. In the tensile test, the chuck-to-chuck distance was 50 mm. The ambient temperature was 130°C, and the tensile speed was 300 mm/min.

After the tensile test, fracture of the test piece was observed visually. Formability was evaluated based on breaking elongation G (%) calculated using the following formula (1) and the following criteria. "◎ " indicates the best evaluation result. "∘ " indicates the second best evaluation result. "△ " indicates the third best evaluation result. "×" indicates the worst evaluation result.

$$\text{Formula (1)} \quad G = (\Delta/50) \times 100$$

In Formula (1), $\Delta$ is the length (mm) that the test piece was elongated at the time of fracture in the tensile test.

◎ : Breaking elongation G exceeds 200%.
∘ : Breaking elongation G exceeds 100% and is 200% or less.
△ : Breaking elongation G is 50% or more and 100% or less.
×: Breaking elongation G is less than 50%.

(v) Abrasion Resistance

A wear test was conducted using a wear tester manufactured by Toyo Seiki Seisaku-sho, Ltd. In the wear test, steel wool #0000 was brought into contact with the resin cured layer of the hard coat film for forming from above. Additionally, a load of 500 g was applied to the steel wool. The contact area between the resin cured layer and the steel wool was 4 cm$^2$. In this state, the steel wool was moved back and forth 10 times. The speed of the back-and-forth movement was 30 times per minute.

Haze of the resin cured layer before the abrasion test and haze of the resin cured layer after the abrasion test were measured separately. The haze measurement method was in accordance with JIS K7136. For haze measurement, Haze-GARD2 manufactured by Toyo Seiki Seisaku-sho, Ltd. was used. An increase rate of the haze in the resin cured layer after the wear test relative to the haze in the resin cured layer before the wear test was defined as a haze increase rate. Based on the haze increase rate, abrasion resistance of the resin cured layer was evaluated according to the following criteria. "∘ " indicates a better evaluation result than "×".

∘ : The increase rate of haze is less than 5%.
×: The increase rate of haze is 5% or more.

(vi) Car Wash Durability

An abrasion test was conducted in accordance with DIN EN ISO 20566 using a car wash durability abrasion tester (Amtec Kistler GmbH). The gloss g1 of the resin cured layer before the abrasion test and the gloss g2 of the resin cured layer after the abrasion test were measured using a micro-tri-gross (manufactured by BYK). The measurement angle for gloss was 20°. A gloss retention rate Y (%) was calculated using the following formula (2).

$$\text{(Formula 2)} \quad Y = (g2/g1) \times 100$$

Based on the gloss retention rate Y, car wash durability of the resin cured layer was evaluated according to the following criteria. "◎" indicates the best evaluation result. "∘ " indicates an evaluation result that is inferior to "◎ " but superior to "×".

◎ : The gloss retention rate Y exceeds 75%.
∘ : The gloss retention rate Y is 50% or more and 75% or less.
×: The gloss retention rate Y is less than 50%.

(6-5) Evaluation Results of Hard Coat Film for Forming

Evaluation results of the hard coat film for forming in each example and each comparative Example are shown in Tables 4 to 6. In Tables 4 to 6, the values listed in "Formability" row are the breaking elongation G. In Tables 4 to 6, the values listed in "Abrasion resistance" row are the haze increase rate. In Tables 4 to 6, the values listed in "Car wash durability" row are the gloss retention rate Y.

[Table 4]

| Evaluation Item | Example 1 | Example 2 | Example 3 | Example 4 | Example 5 |
|---|---|---|---|---|---|
| Chemical resistance | ○ | ○ | ○ | ○ | ○ |
| Wear resistance | ○ | ○ | ○ | ○ | ○ |
| Adhesion | ○ | ○ | ○ | ○ | ○ |
| Formability | 150% | 150% | 150% | 130% | 135% |
|  | ○ | ○ | ○ | ○ | ○ |
| Aabrasion resistance Evaluation | 4.4% | 4.5% | 4.8% | 4.3% | 4.3% |
|  | ○ | ○ | ○ | ○ | ○ |
| Car wash durability Evaluation | 82% | 83% | 78% | 88% | 85% |
|  | ◎ | ◎ | ◎ | ◎ | ◎ |

[Table 5]

| Evaluation Item | Example 6 | Example 7 | Example 8 | Example 9 | Example 10 | Example 11 |
|---|---|---|---|---|---|---|
| Chemical resistance | ○ | ○ | ○ | ○ | ○ | ○ |
| Wear resistance | ○ | ○ | ○ | ○ | ○ | ○ |
| Adhesion | ○ | ○ | ○ | ○ | ○ | ○ |
| Formability | 150% | 150% | 135% | 60% | 100% | 250% |
|  | ○ | ○ | ○ | △ | ○ | ◎ |
| Aabrasion resistance Evaluation | 4.0% | 4.2% | 4.4% | 2.0% | 3.2% | 4.6% |
|  | ○ | ○ | ○ | ○ | ○ | ○ |
| Car wash durability Evaluation | 88% | 79% | 57% | 91% | 92% | 82% |
|  | ◎ | ◎ | ○ | ◎ | ◎ | ◎ |

[Table 6]

| Evaluation Item | Comparative example 1 | Comparative example 2 | Comparative example 3 | Comparative example 4 | Comparative example 5 |
|---|---|---|---|---|---|
| Chemical resistance | ○ | ○ | ○ | ○ | ○ |
| Wear resistance | × | ○ | × | ○ | × |
| Adhesion | ○ | ○ | ○ | ○ | ○ |
| Formability | 150% | 150% | 150% | 30% | >300% |
|  | ○ | ○ | ○ | × | ◎ |
| Aabrasion resistance Evaluation | 8.3% | 10.3% | 10.1% | 1.3% | 9.8% |
|  | × | × | × | ○ | × |
| Car wash durability Evaluation | 43% | 25% | 30% | 95% | 43% |
|  | × | × | × | ◎ | × |

The hard coat film for forming in each example exhibited excellent chemical resistance, wear resistance, adhesion, formability, abrasion resistance, and car wash durability. The reason why the hard coat film for forming in each example exhibits excellent car wash durability is that the photocurable resin composition in each example contains the component (B).

The photocurable resin compositions of Examples 1 to 7 and 9 to 11 contain the component (B) having an average particle size of 50 to 100 nm. The hard coat films for forming of Examples 1 to 7 and 9 to 11 are particularly excellent in car wash durability.

The photocurable resin composition of Comparative Example 1 does not contain the component (C). The hard coat film for forming of Comparative Example 1 was poor in wear resistance, abrasion resistance, and car wash durability. The photocurable resin composition of Comparative Example 2 does not contain the component (B). The hard coat film for forming of Comparative Example 2 was poor in abrasion resistance and car wash durability.

The photocurable resin composition of Comparative Example 3 does not contain the component (B) and contains nanosilica having an average particle size of 40 to 50 nm. The hard coat film for forming of Comparative Example 3 was poor in wear resistance, abrasion resistance, and car wash durability.

In the photocurable resin composition of Comparative Example 4, Mw of the component (A) was less than 2,000. In the hard coat film for forming of Comparative Example 4, the breaking elongation G was less than 50%. The hard coat film for forming of Comparative Example 4 was poor in formability.

In the photocurable resin composition of Comparative Example 5, Mw of the component (A) exceeded 12,000. In the hard coat film for forming of Comparative Example 5, the gloss retention rate Y was less than 50%. The hard coat film for forming of Comparative Example 5 was poor in wear resistance, abrasion resistance, and car wash durability.

(6-6) Evaluation of Weather Resistance

Hard coat films F1 to F5 for forming shown in Table 7 were produced basically in the same manner as for the hard coat film of Example 2.

[Table 7]

| HC film for forming | F1 | F2 | F3 | F4 | F5 |
|---|---|---|---|---|---|
| Plastic base material | PMMA / PC | PMMA / PC | PC | acryl | PET |
| Resin cured layer | Composition of Example 2 | Composition of Example 1 | Composition of Example 2 | Composition of Example 2 | Composition of Example 2 |
| $\Delta E$ of base material alone | 0.2 | 0.2 | 9.2 | 0.5 | 9.9 |
| $\Delta E$ of HC film for forming | 0.3 | 0.5 | 9.2 | 0.5 | 9.9 |

In Table 7, "HC film for forming" indicates a hard coat film for forming. The hard coat film F1 for forming was the hard coat film for forming of Example 2. The hard coat film F2 for forming is basically the same as the hard coat film for forming of Example 2, but the photocurable resin composition of Example 1 was used to form the resin cured layer.

The hard coat film F3 for forming is basically the same as the hard coat film for forming in Example 2, but a polycarbonate film (product name: PC-1151, manufactured by Teijin Limited) was used as the plastic base material. The thickness of the plastic base material in the hard coat film F3 for forming was 200 $\mu$m.

The hard coat film F4 for forming is basically the same as the hard coat film for forming in Example 2, but an acrylic film (product name: HBA007P, manufactured by Mitsubishi Chemical Corporation) was used as the plastic base material. The thickness of the plastic base material in the hard coat film F4 for forming was 125 $\mu$m.

The hard coat film F5 for forming is basically the same as the hard coat film for forming in Example 2, but a PET film (product name: U403, Toray Industries, Inc.) was used as the plastic base material. The thickness of the plastic base material in the hard coat film F5 for forming was 125 $\mu$m.

For each of the hard coat films F1 to F5 for forming, $\Delta E$ was measured. The $\Delta E$ measurement method was as follows. A color difference measuring device SD-6000 manufactured by Nippon Denshoku Industries Co., Ltd. was used to measure the color tone of the hard coat film for forming before UVB irradiation in accordance with JIS Z 8722.

Next, a UVB irradiation test was conducted on the hard coat film for forming at 60°C for 1,000 hours. The UVB intensity was 0.55 W/m$^2$. After the UVB irradiation, the color tone of the hard coat film for forming was measured using the color difference measuring instrument SD-6000 manufactured by Nippon Denshi Kogyo Co., Ltd., in accordance with JIS Z 8722. The difference between the color tones before and after the UVB irradiation was defined as $\Delta E$. The smaller the value of $\Delta E$, the better the weather resistance of the hard coat films F1 to F5 for forming. $\Delta E$s of the hard coat films F1 to F5 for forming are shown in the "ΔE of HC film for forming" row of Table 7.

ΔE was also measured using the same method for the plastic base material used in each of the hard coat films F1 to F5 for forming. The smaller the value of ΔE, the better the weather resistance of the plastic base material. ΔE of the plastic base material is shown in the "ΔE of base material alone" row of Table 7.

ΔEs of the hard coat films F1 to F5 for forming were greatly affected by the type of plastic base material. By using plastic base materials with low ΔE, it is possible to reduce ΔEs of the hard coat films F1 to F5 for forming.

The photocurable resin composition of Example 2 contains the component (E). In the hard coat films F1 and F3 to F5 for forming, the resin cured layer is formed using the photocurable resin composition of Example 2. In the hard coat films F1 and F3 to F5 for forming, ΔEs of the hard coat films F1 to F5 for forming were small, and the weather resistance was excellent.

(6-7) Evaluation of Injection forming

Insert forming was performed using the hard coat film for forming of Example 1. The injection forming resin used for insert forming was black ABS. An insert molded product was obtained by insert forming.

Using a paint surface quality measuring instrument, wave-scan 3 dual manufactured by BYK, LW (long wave) and SW (short wave) were measured on a film surface of an insert molded product. Additionally, as a comparison, the same measurements were performed on a painted surface of a painted steel sheet. The results of the LW and SW measurements are shown in the "wave-scan" row of Table 8. Furthermore, appearance of the insert molded product and the painted steel sheet was visually observed. The results of the appearance observation are shown in the "Evaluation" row of Table 8.

[Table 8]

|  | Insert formed product | Painted steel sheet (for comparison) |
|---|---|---|
| wave-scan | LW: 1.8<br>SW: 2.5 | LW:15.2<br>SW: 57.2 |
| Evaluation | - | Orange peel |

The painted steel sheet had an orange peel appearance defect. In contrast, the insert molded product did not have an orange peel appearance defect.

(6-8) Evaluation of forming film

Forming films F11 to F16 each having a layer structure shown in Table 9 were produced. The forming films F11 to F16 each have a layer structure in which a fourth layer, a third layer, a second layer, and a top layer shown in Table 9 are arranged in order in the thickness direction.

[Table 9]

| | | Resin cured layer | Layer structure | | | | Formability |
|---|---|---|---|---|---|---|---|
| | | plastic base material | Top layer | Second layer | Third layer | Fourth layer | |
| Forming film F11 | Example 1 | DF02PUL | Resin cured layer | Base material | Decorative layer | Adhesive layer | ○ |
| Forming film F12 | Example 2 | DF02PUL | Resin cured layer | Base material | Decorative layer | Adhesive layer | ○ |
| Forming film F13 | Example 1 | DF02PUL | Resin cured layer | Decorative layer | Base material | Adhesive layer | ○ |
| Forming film F14 | Example 2 | DF02PUL | Resin cured layer | Decorative layer | Base material | Adhesive layer | ○ |
| Forming film F15 | Comparative Example 4 | DF02PUL | Resin cured layer | Base material | Decorative layer | Adhesive layer | × |
| Forming film F16 | Comparative Example 4 | DF02PUL | Resin cured layer | Decorative layer | Base material | Adhesive layer | × |

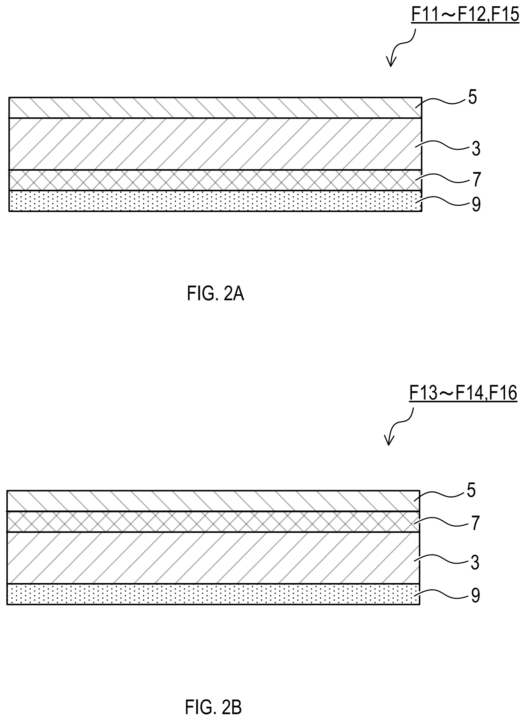

In Table 9, "base material" indicates the plastic base material. FIG. 2A shows the layer structure of the forming films F11, F12 and F15. Each of the forming films F11, F12 and F15 comprises the plastic base material 3, the resin cured layer 5, the decorative layer 7, and the adhesive layer 9. The resin cured layer 5 is formed on one main surface of the plastic base material 3. The decorative layer 7 and the adhesive layer 9 are formed on the other main surface of the plastic base material 3. The decorative layer 7 is formed between the plastic base material 3 and the adhesive layer 9.

FIG. 2B shows the layer structure of the forming films F13, F14 and F16. Each of the forming films F13, F14 and F16 comprises the plastic base material 3, the resin cured layer 5, the decorative layer 7, and the adhesive layer 9. The adhesive layer 9 is formed on one main surface of the plastic base material 3. The resin cured layer 5 and the decorative layer 7 are formed on the other main surface of the plastic base material 3. The decorative layer 7 is formed between the plastic base material 3 and the resin cured layer 5.

In all of the forming films F11 to F16, the plastic base material was Iupilon film DF02PUL (product name, manufactured by Mitsubishi Gas Chemical Company, Inc.).

In the forming films F11 and F13, the resin cured layer was a layer formed using the photocurable resin composition of Example 1. In the forming films F12 and F14, the resin cured layer was a layer formed using the photocurable resin composition of Example 2. In the forming films F15 and F16, the resin cured layer was a layer formed using the photocurable resin composition of Comparative Example 4.

For all of the forming films F11 to F16, curing conditions for curing the resin cured layer were the same as the curing conditions when manufacturing the hard coat film for forming in the above section (6-3).

In all of the forming films F11 to F16, the decorative layer was formed using IPX-HF (product name, manufactured by Teikoku Printing Inks Mfg. Co., Ltd.). The dry film thickness of the decorative layer was 20 $\mu$m. When forming the decorative layer, the film was dried at 80°C for 10 minutes after applying IPX-HF. Then, the film was cured at 90°C for 60 minutes.

In all of the forming films F11 to F16, the adhesive layer was formed using ULTRASOL OP-3511 (product name, manufactured by Aica Kogyo Co., Ltd.). ULTRASOL OP-3511 was a cross-linked acrylic. The dry film thickness of the adhesive layer was 30 $\mu$m. When forming the adhesive layer, ULTRASOL OP-3511 was applied and then the film was cured at 40°C for two days.

For each of the forming films F11 to F16, vacuum pressure forming was performed as follows, using a TOM forming machine NGF-T-0203 manufactured by Fuse Vacuum Co., Ltd. First, the forming film was heated to 150°C. Next, vacuum pressure forming was performed under a pressure of 300 kPa for 15 seconds using a cylindrical mold of 30 mm diameter $\times$ 20 mm height.

Based on the results of vacuum pressure forming, formability of the forming film was evaluated according to the following criteria. The formability evaluation results are shown in the "Formability" row of Table 9. "∘ " indicates a better evaluation result than "$\times$".

∘ : The forming film was completely shaped.
$\times$: The forming film has whitened or cracked. Or, the forming film was not completely shaped.

In the forming films F11 to F14, the resin cured layer is formed using the photocurable resin composition of Example 1 or 2. The forming films F11 to F14 exhibited good formability. In the forming films F15 and F16, the resin cured layer is formed using the photocurable resin composition of Comparative Example 4. The forming films F15 and F16 exhibited poor formability.

7. Effects of Photocurable Resin Composition, Hard Coat Film for Forming, and Forming Film

The photocurable resin composition, the hard coat film for forming, and the forming film of the present disclosure have high breaking elongation and good formability. Furthermore, the photocurable resin composition, the hard coat film for forming, and the forming film of the present disclosure exhibit excellent scratch resistance. The photocurable resin composition, the hard coat film for forming, and the forming film of the present disclosure are useful as materials for formed products used in automotive exterior applications. Examples of the formed products used in automotive exterior applications include roofs, hoods, pillars, fenders, doors, headlamps, front grilles, bumpers, and the like.

8. Other Embodiments

The embodiment of the present disclosure has been described in the above. However, the present disclosure is not limited to the above-described embodiment and can be practiced in various forms.

(1) Functions of a single component in each of the above embodiments may be shared among two or more components, or functions of two or more components may be performed by a single component. In addition, some of the components of each of the above embodiments may be omitted. Furthermore, at least some of the components of each of the above embodiments may be added to or replaced with the components of another of the above embodiments.

(2) In addition to the above-described hard coat film for forming and forming film, it is also possible to practice the present disclosure in various forms, such as a system comprising any of these as a component, a method for producing a photocuring resin composition, a method for producing a hard coat film for forming, and a method for producing a forming film.

[Technical Idea Disclosed in Present Specification]

[Item 1]

A photocurable resin composition comprising: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D),
wherein a weight-average molecular weight of the urethane acrylate (A) is 2,000 to 12,000, and wherein a primary average particle size of the alumina fine particles (B) is 40 to 150 nm.

[Item 2]

A photocurable resin composition comprising: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D),

wherein a primary average particle size of the alumina fine particles (B) is 40 to 150 nm, and
wherein a breaking elongation of a film having a base material and a cured layer of the photocurable resin composition formed on the base material is 50% or more at an ambient temperature of 130°C and a tensile speed of 300 mm/min

[Item 3]

A photocurable resin composition comprising: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D),

wherein a weight-average molecular weight of the urethane acrylate (A) is 2,000 to 12,000 and
wherein, when an abrasion test is conducted on a film having a base material and a cured layer of the photocurable resin composition formed on the base material using a car wash abrasion tester in accordance with DIN EN ISO20566, gloss of the cured layer after the abrasion test is 50% or more of the gloss of the cured layer before the abrasion test.

[Item 4]

The photocurable resin composition according to any one of Items 1 to 3, wherein the leveling agent (C) is a silicone compound.

[Item 5]

The photocurable resin composition according to any one of Items 1 to 4, further comprising a photostabilizer (E).

[Item 6]

A hard coat film for forming comprising:

a plastic base material; and
a cured layer of a photocurable resin composition according to any one of Items 1 to 5 formed on the plastic base material.

[Item 7]

A forming film comprising:

a plastic base material;
a cured layer of a photocurable resin composition according to any one of Items 1 to 5 formed on the plastic base material; and
one or more of a decorative layer, a pressure-sensitive adhesive layer, and a backing sheet layer.

[Item 8]

The forming film according to Item 7,
wherein the forming film is used for vehicle exterior.

[Item 9]

A method for producing an insert molded product, the method comprising:

shaping a forming film using a mold, the forming film having a plastic base material; a cured layer of a photocurable resin composition formed on the plastic base material; and one or more of: a decorative layer; a pressure-sensitive adhesive layer; and a backing sheet layer; and
injecting molten resin onto the forming film from a side opposite to the cured layer to form a resin formed product,
wherein the photocurable resin composition comprises: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D),
wherein a weight-average molecular weight of the urethane acrylate (A) is 2,000 to 12,000, and
wherein a primary average particle size of the alumina fine particles (B) is 40 to 150 nm.

[Item 10]

A method for producing an out-mold formed product, the method comprising

vacuum forming or pressure forming a forming film onto a preformed base material, the forming film comprising one or more of: a plastic base material; a cured layer of a photocurable resin composition formed on the plastic base material; a decorative layer; a pressure-sensitive adhesive layer; and a backing sheet layer,
wherein the photocurable resin composition comprises: urethane acrylate (A) obtained by reacting pentaerythritol triacrylate with diisocyanate that is obtained by reacting ethylene glycol and isophorone diisocyanate; alumina fine particles (B); a leveling agent (C); and a photoinitiator (D),
wherein a weight-average molecular weight of the urethane acrylate (A) is 2,000 to 12,000, and
wherein a primary average particle size of the alumina fine particles (B) is 40 to 150 nm.

[Item 11]

An insert molded product using a forming film according to Item 7 or 8.

[Item 12]

An out-mold formed product using a forming film according to Item 7 or 8.

EXPLANATION OF REFERENCE NUMERALS

1...hard coat film for forming, 3... plastic base material, 5...resin cured layer, 7...decorative layer, 9...adhesive layer, F11 to F16...forming film

**Claims**

1. A photocurable resin composition comprising:

urethane acrylate (A) obtained by reacting pentaerythritol triacrylate with diisocyanate that is obtained by reacting ethylene glycol and isophorone diisocyanate;
alumina fine particles (B);
a leveling agent (C); and
a photoinitiator (D),
wherein a weight-average molecular weight of the urethane acrylate (A) is 2,000 to 12,000, and
wherein a primary average particle size of the alumina fine particles (B) is 40 to 150 nm.

2. A photocurable resin composition comprising:

urethane acrylate (A) obtained by reacting pentaerythritol triacrylate with diisocyanate that is obtained by reacting ethylene glycol and isophorone diisocyanate;
alumina fine particles (B);
a leveling agent (C); and
a photoinitiator (D),
wherein a primary average particle size of the alumina fine particles (B) is 40 to 150 nm, and
wherein a breaking elongation of a film having a base material and a cured layer of the photocurable resin composition formed on the base material is 50% or more at an ambient temperature of 130°C and a tensile speed of 300 mm/min.

3. A photocurable resin composition comprising:

urethane acrylate (A) obtained by reacting pentaerythritol triacrylate with diisocyanate that is obtained by reacting ethylene glycol and isophorone diisocyanate;
alumina fine particles (B);
a leveling agent (C); and
a photoinitiator (D),
wherein a weight-average molecular weight of the urethane acrylate (A) is 2,000 to 12,000 and
wherein, when an abrasion test is conducted on a film having a base material and a cured layer of the photocurable resin composition formed on the base material using a car wash abrasion tester in accordance with DIN EN ISO20566, gloss of the cured layer after the abrasion test is 50% or more of the gloss of the cured layer before the abrasion test.

4. The photocurable resin composition according to any one of claims 1 to 3,
wherein the leveling agent (C) is a silicone compound.

5. The photocurable resin composition according to any one of claims 1 to 3, further comprising a photostabilizer (E).

6. A hard coat film for forming comprising:

a plastic base material; and
a cured layer of a photocurable resin composition according to any one of claims 1 to 3 formed on the plastic base material.

7. A forming film comprising:

a plastic base material;
a cured layer of a photocurable resin composition according to any one of claims 1 to 3 formed on the plastic base material; and
one or more of a decorative layer, a pressure-sensitive adhesive layer, and a backing sheet layer.

8. The forming film according to claim 7,
wherein the forming film is used for vehicle exterior.

9. A method for producing an insert molded product, the method comprising:

shaping a forming film using a mold, the forming film having a plastic base material; a cured layer of a photocurable resin composition formed on the plastic base material; and one or more of: a decorative layer; a pressure-sensitive adhesive layer; and a backing sheet layer; and
injecting molten resin to the forming film from a side opposite to the cured layer to form a resin formed product, wherein the photocurable resin composition comprises:

urethane acrylate (A) obtained by reacting pentaerythritol triacrylate with diisocyanate that is obtained by reacting ethylene glycol and isophorone diisocyanate;
alumina fine particles (B);
a leveling agent (C); and

a photoinitiator (D),

wherein a weight-average molecular weight of the urethane acrylate (A) is 2,000 to 12,000, and
wherein a primary average particle size of the alumina fine particles (B) is 40 to 150 nm.

10. A method for producing an out-mold formed product, the method comprising

vacuum forming or pressure forming a forming film onto a preformed base material, the forming film comprising a plastic base material; a cured layer of a photocurable resin composition formed on the plastic base material; and one or more of: a decorative layer; a pressure-sensitive adhesive layer; and a backing sheet layer, wherein the photocurable resin composition comprises:

urethane acrylate (A) obtained by reacting pentaerythritol triacrylate with diisocyanate that is obtained by reacting ethylene glycol and isophorone diisocyanate;
alumina fine particles (B);
a leveling agent (C); and
a photoinitiator (D),

wherein a weight-average molecular weight of the urethane acrylate (A) is 2,000 to 12,000, and
wherein a primary average particle size of the alumina fine particles (B) is 40 to 150 nm.

11. An insert molded product using a forming film according to claim 7.

12. An out-mold formed product using a forming film according to claim 7.

FIG. 1

F11~F12,F15

5
3
7
9

FIG. 2A

F13~F14,F16

5
7
3
9

FIG. 2B

## INTERNATIONAL SEARCH REPORT

| International application No. |
|---|
| **PCT/JP2024/016463** |

**A. CLASSIFICATION OF SUBJECT MATTER**

*C08F 290/06*(2006.01)i; *B29C 45/14*(2006.01)i; *B32B 27/16*(2006.01)i; *B32B 27/18*(2006.01)i; *B32B 27/30*(2006.01)i;
*B32B 27/40*(2006.01)i; *C08F 299/06*(2006.01)i; *C08G 18/32*(2006.01)i; *C08G 18/67*(2006.01)i; *C08G 18/75*(2006.01)i;
*C08J 7/046*(2020.01)i; *C09D 4/02*(2006.01)i; *C09D 5/00*(2006.01)i; *C09D 7/47*(2018.01)i; *C09D 7/48*(2018.01)i;
*C09D 7/61*(2018.01)i; *C09D 7/63*(2018.01)i; *C09D 175/14*(2006.01)i

FI: C08F290/06; B29C45/14; B32B27/16 101; B32B27/18 Z; B32B27/30 A; B32B27/40; C08F299/06; C08G18/32 006;
C08G18/67 010; C08G18/75 010; C08J7/046 CER; C09D4/02; C09D5/00 Z; C09D7/47; C09D7/48; C09D7/61;
C09D7/63; C09D175/14

According to International Patent Classification (IPC) or to both national classification and IPC

**B. FIELDS SEARCHED**

Minimum documentation searched (classification system followed by classification symbols)

C08F290/06; B29C45/14; B32B27/16; B32B27/18; B32B27/30; B32B27/40; C08F299/06; C08G18/32; C08G18/67;
C08G18/75; C08J7/046; C09D4/02; C09D5/00; C09D7/47; C09D7/48; C09D7/61; C09D7/63; C09D175/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-111793 A (AICA KOGYO CO., LTD.) 19 July 2018 (2018-07-19) | 3-8, 11-12 |
|  | claims, paragraphs [0002], [0016], examples | |
| A | entire text | 1-2, 9-10 |
| Y | JP 2022-148524 A (MITSUBISHI CHEMICAL CORPORATION) 06 October 2022 (2022-10-06) | 3-8, 11-12 |
|  | paragraphs [0002]-[0003], [0053], [0064], [0098] | |
| A | entire text | 1-2, 9-10 |

✓ Further documents are listed in the continuation of Box C.　　✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 June 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/016463** |

**C.     DOCUMENTS CONSIDERED TO BE RELEVANT**

| Category* | Citation of document, with indication, where appropriate, of the relevant passages | Relevant to claim No. |
| --- | --- | --- |
| Y | JP 2017-178999 A (NIPPON PAPER INDUSTRIES CO., LTD.) 05 October 2017 (2017-10-05)<br>paragraphs [0001]-[0006], [0048], [0052], [0065] | 3-8, 11-12 |
| A | entire text | 1-2, 9-10 |
| A | JP 2020-189937 A (DAINICHISEIKA COLOR & CHEMICALS MFG. CO., LTD.) 26 November 2020 (2020-11-26)<br>entire text | 1-12 |
| A | JP 2021-66874 A (AICA KOGYO CO., LTD.) 30 April 2021 (2021-04-30)<br>entire text | 1-12 |
| A | JP 2016-60839 A (MITSUBISHI CHEMICAL CORP.) 25 April 2016 (2016-04-25)<br>entire text | 1-12 |
| A | JP 2011-42770 A (ARAKAWA CHEMICAL INDUSTRIES, LTD.) 03 March 2011 (2011-03-03)<br>entire text | 1-12 |
| A | WO 2016/199847 A1 (KANEKA CORP.) 15 December 2016 (2016-12-15)<br>entire text | 1-12 |

Form PCT/ISA/210 (second sheet) (July 2022)

**INTERNATIONAL SEARCH REPORT**
Information on patent family members

International application No.

**PCT/JP2024/016463**

| Patent document cited in search report | | | Publication date (day/month/year) | Patent family member(s) | | | Publication date (day/month/year) |
|---|---|---|---|---|---|---|---|
| JP | 2018-111793 | A | 19 July 2018 | (Family: none) | | | |
| JP | 2022-148524 | A | 06 October 2022 | (Family: none) | | | |
| JP | 2017-178999 | A | 05 October 2017 | (Family: none) | | | |
| JP | 2020-189937 | A | 26 November 2020 | US entire text TW CN | 2022/0145123 202104478 113874446 | A1 A A | |
| JP | 2021-66874 | A | 30 April 2021 | (Family: none) | | | |
| JP | 2016-60839 | A | 25 April 2016 | (Family: none) | | | |
| JP | 2011-42770 | A | 03 March 2011 | (Family: none) | | | |
| WO | 2016/199847 | A1 | 15 December 2016 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023076071 A
- JP 2023096973 A
- JP 2023185167 A
- JP 2023191904 A
- JP 4848200 B